# EUROPÄISCHE PATENTSCHRIFT

(11) **EP 0 766 996 B1**
(45) Veröffentlichungstag und Bekanntmachung des Hinweises auf die Patenterteilung: **08.03.2000**
(21) Anmeldenummer: 95810630.4
(22) Anmeldetag: 05.10.1995
(51) Int. Cl.: B01F 3/10, B29B 7/88, B01F 5/10, B29B 7/74

(54) **Mischeinrichtung zum Mischen eines niedrigviskosen Fluids in ein hochviskoses Fluid**
Apparatus for mixing a low viscosity fluid with a high viscosity fluid
Appareil mélangeur d'un fluide très visqueux avec un fluide peu visqueux

(43) Veröffentlichungstag der Anmeldung: 09.04.1997
(73) Patentinhaber: Sulzer Chemtech AG, 8404 Winterthur (CH)
(72) Erfinder: Streiff, Felix, CH-8400 Winterthur (CH); Walder, Andreas, CH-8600 Dübendorf (CH); Signer, Arno, CH-8542 Wiesendangen (CH)
(74) Vertreter: Heubeck, Bernhard

(56) Entgegenhaltungen:
- EP-A- 0 472 491
- WO-A-92/16345
- DE-A- 2 315 114
- PATENT ABSTRACTS OF JAPAN vol. 950 no. 004 & JP-A-07 100825 (DENKI KAGAKU KOGYO KK) 18.April 1995,
- PATENT ABSTRACTS OF JAPAN vol. 005 no. 094 (C-059) ,19.Juni 1981 & JP-A-56 038125 (TORAY IND INC) 13.April 1981,

## Beschreibung

Die Erfindung betrifft eine Mischeinrichtung zum Mischen eines niedrigviskosen Fluids in ein hochviskoses Fluid. Als hochviskose Fluide sind insbesondere Polymerschmelzen vorgesehen; als niedrigviskose Fluide Additive, die in Polymerschmelzen eingearbeitet werden sollen. Das Additiv kann sowohl in der Schmelze löslich als auch unlöslich sein. Der Viskositätsunterschied zwischen den Fluiden ist in der Regel sehr gross; die Viskositäten können sich um einen Faktor in der Grössenordnung von zwei oder mehr Zehnerpotenzen unterscheiden. Als niedrigviskose Fluide kommen neben Flüssigkeiten auch Gase in Frage. Die hochviskosen Fluide können Feststoffe enthalten. Die Erfindung betrifft auch Verfahren, die mit der genannten Einrichtung durchführbar sind, sowie Anwendungen der Verfahren.

Aus der DE-C-23 15 114 ist ein Verfahren zum Mischen von Flüssigkeiten mit stark unterschiedlichen Viskositäten bekannt. Die niedrigviskose Flüssigkeit wird bei diesem Verfahren mit einem Zweigstrom der hochviskosen Flüssigkeit in einem dynamischen Mischer vorvermischt, die so hergestellte Vormischung mit dem nicht abgezweigten Teil des Stroms der hochviskosen Flüssigkeit vereinigt und der Gesamtstrom in einem statischen Mischer weiter gemischt. Das bekannte Verfahren lässt sich mit Vorteil beim Einarbeiten von niedrigviskosen Additiven in Polymerschmelzen anwenden. Denn es ist möglich, die Additive schonend, d.h. ohne starke Scherbeanspruchung des Polymers, homogen einzumischen. Laut der Lehre der DE-C-23 15 114 ist ein entsprechendes Einmischen unter der ausschliesslichen Verwendung von produktschonend arbeitenden statischen Mischern nur sehr unzureichend.

Die Verwendung von dynamischen Mischern ist allerdings aufwendig sowie wartungsintensiv; und eine Degradation der Polymere in solchen Mischern aufgrund von Scherung und Erwärmung durch Rührbewegungen ist in Kauf zu nehmen. Es ist daher Aufgabe der Erfindung, eine Mischeinrichtung zu schaffen, die ohne dynamische Mischer auskommt und die eine homogene Einmischung von niedrigviskosen Additiven in Polymerschmelzen ermöglicht. Diese Aufgabe ist durch die im Anspruch 1 definierte Einrichtung lösbar.

Diese Mischeinrichtung zum Mischen eines niedrigviskosen Fluids in ein hochviskoses Fluid umfasst folgende Teile: eine zum Leiten des hochviskosen Fluids vorgesehenen Hauptlinie mit statischen Mischeinbauten eines Hauptmischers; eine Seitenlinie für einen Zweigstrom, die von der Hauptlinie abzweigend zum Eingang des Hauptmischers führt, wobei die Hauptlinie und die Seitenlinie bei dem Hauptmischer durch im wesentlichen achsparallele Rohrstücke gebildet sind; eine in der Seitenlinie angeordnete Pumpe; ein statischer Hilfsmischer am Ende der Seitenlinie; sowie eine Düse am Eingang des Hilfsmischers zum Einspeisen des niedrigviskosen Fluids.

Die abhängigen Ansprüche 2 bis 7 betreffen vorteilhafte Ausführungsformen der erfindungsgemässen Einrichtung. Die Ansprüche 8 bis 11 beziehen sich auf Mischverfahren, die mit der erfindungsgemässen Einrichtung ausführbar sind. Anspruch 12 betrifft eine Anwendung des Verfahrens.

Ein wichtiger Vorteil des erfindungsgemässen Verfahrens gegenüber dem bekannten Verfahren besteht darin, dass der Hilfsmischer als Wärmetauscher ausgebildet werden kann. Die beim Mischen dissipierte Energie kann mit einem Kühlmittel kontinuierlich abgeleitet werden, so dass eine Degradation der Polymere weitgehend verhinderbar ist.

Nachfolgend wird die Erfindung anhand der Zeichnungen erläutert. Es zeigen:
- Fig. 1: ein Mischelement eines bekannten statischen Mischers,
- Fig. 2: eine erste erfindungsgemässe Einrichtung,
- Fig. 3: eine Einrichtung mit einem knieförmigen Hauptrohr,
- Fig. 4: eine Variante zur Einrichtung der Fig.3 und
- Fig. 5: eine weitere Ausführungsform der erfindungsgemässen Einrichtung.

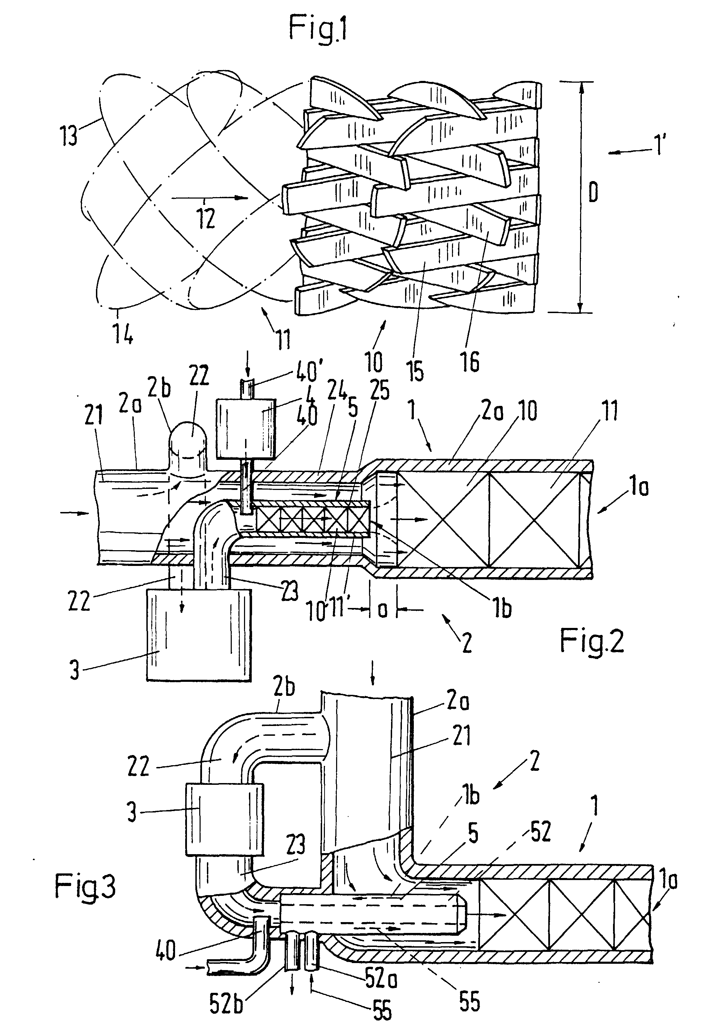

Das Mischelement 10 der Fig.1 weist eine Struktur auf, die sich aus ineinandergreifenden, sich kreuzenden Stegen 15, 16 aufbaut, wobei die Stege zwei Gruppen von parallel ausgerichteten Strukturelementen bilden. Ein benachbartes Mischelement 11 ist strichpunktiert angedeutet. Die elliptischen Linien 13, 14 geben die Ränder von Flächen an, die durch nicht dargestellte Stege aufgespannt werden. Die Flächen mit den Rändern 13 bzw. 14 kreuzen einander. Die zwei Mischelemente 10 und 11 sind gleich; aber das eine ist gegenüber dem anderen um 90° um die Längsachse gedreht angeordnet. Die Längsachse verläuft in Richtung des Pfeils 12, der die Hauptströmungsrichtung darstellt. Eine Mehrzahl von hintereinander angeordneter Mischelemente 11, 10 bilden Mischeinbauten 1' eines statischen Mischers. Der Durchmesser der Mischelemente ist mit D bezeichnet.

Die erfindungsgemässe Mischeinrichtung 2 der Fig.2 umfasst folgende Teile: Ein Rohr 21, das die Hauptlinie 2a bildet; die Seitenlinie 2b, die durch Rohrstücke 22, 23 und 25 sowie eine Pumpe 3 gebildet wird, wobei die Pumpe 3 - mit Vorzug eine Zahnradpumpe - zum Fördern von hochviskosem Fluid vorgesehen ist; ein Hauptmischer 1 in der Hauptlinie 2a mit statischen Mischeinbauten 1a (Mischelemente 10, 11); ein Hilfsmischer 5 am Ende der Nebenlinie 2b, der ein Rohrstück 25 und statische Mischeinbauten 1b (Mischelemente 10', 11') umfasst; ferner eine Dosierpumpe 4 für niedrigviskoses Fluid mit einer Zuführleitung 40' und einer Einspeisedüse 40 beim Eintritt des Hilfsmischers 5. Der Hauptmischer kann als Wärmetauscher ausgebildet sein, nämlich in der Weise, dass das Hauptrohr 21 im Bereich der Mischeinbauten 1a als Doppelmantel (nicht dargestellt) ausgebildet ist.

Das Rohrstück 25 ist koaxial innerhalb des Rohrstücks 24 angeordnet, das ein Teil des Hauptrohrs 21 ist. Die Lage des Rohrstücks 25 kann bezüglich dem Rohrstück 24 auch exzentrisch, jedoch im wesentlichen achsparallel angeordnet sein. Das aus dem Hauptrohr 21 abzweigende Rohrstück 22 bildet einen Bogen, der in einer zur Hauptlinie 2a senkrecht stehenden Ebene liegt. Es wird in die Seitenlinie 2b weniger als 50 %, vorzugsweise 10 bis 15 % des höherviskosen Fluids aus der Hauptlinie 2a abgezweigt.

Das Rohrstück 23, das einen knieförmigen Bogen aufweist, verbindet durch die Wand des Hauptrohrs 21 die Pumpe 3 mit dem Hilfsmischer 5. Im Hilfsmischer 5 ist eine wesentlich höhere Scherung des Fluidgemisches als im Hauptmischer 1 vorgesehen. Die Strömungsgeschwindigkeit im Hilfsmischer 5 ist daher in der Regel grösser als im Hauptstrom zwischen den beiden Rohrstücken 24 und 25. In diesem Fall verbreitert sich der aus dem Nebenmischer 5 austretende Fluidstrom beim Übertritt in den Hauptmischer 1 (mit strichlierten Linien angedeutet).

Die Düse 40 vor dem Hilfsmischer 5, mit der das niedrigviskose Fluid eingespeist wird, steht quer zur Strömungsrichtung des hochviskosen Fluids.

Das hochviskose Fluid ist beispielsweise eine Polymerschmelze. Das niedrigviskose Fluid kann ein flüssiges oder ein gasförmiges Additiv sein. Dieses Additiv wird im Hilfsmischer 5 in das hochviskose Fluid der Seitenlinie 2b in Form von Tropfen bzw. Blasen dispergiert.

Der Abstand a zwischen dem Austritt des Hilfsmischers 5 und Eintritt des Hauptmischers 1 muss möglichst klein sein: nämlich kleiner als das Zweifache des Durchmessers D, den die Mischeinbauten 1b des Hilfsmischers 5 aufweisen. Bei zu grossem Abstand a ergibt sich eine Entmischung, bei der sich die Tropfen bzw. Blasen teilweise wieder vereinigen.

Die im Hilfsmischer 5 erzeugte Dispersion wird im Hauptmischer 1 mit dem Fluid der Hauptlinie 2a vermischt. Es ist im Hauptmischer 1 eine Verweilzeit vorgesehen, die ein zumindest teilweises Auflösen des niedrigviskosen Additivs durch Eindiffundieren aus den Tropfen bzw. Blasen in das hochviskose Fluid ermöglicht.

Die in Fig.3 dargestellte zweite Ausführungsform der erfindungsgemässen Mischeinrichtung 2 unterscheidet sich von der Einrichtung gemäss Fig.2 erstens durch eine Knieform des Hauptrohrs 21. Zweitens ist der Hilfsmischer 5 als Wärmetauscher ausgebildet, der Anschlussrohre 52a und 52b sowie ein Kanalsystem 52 für ein Kühlmittel (Pfeile 55) aufweist. Die Nebenlinie 2b und die Hauptlinie 2a liegen in einer gemeinsamen Ebene.

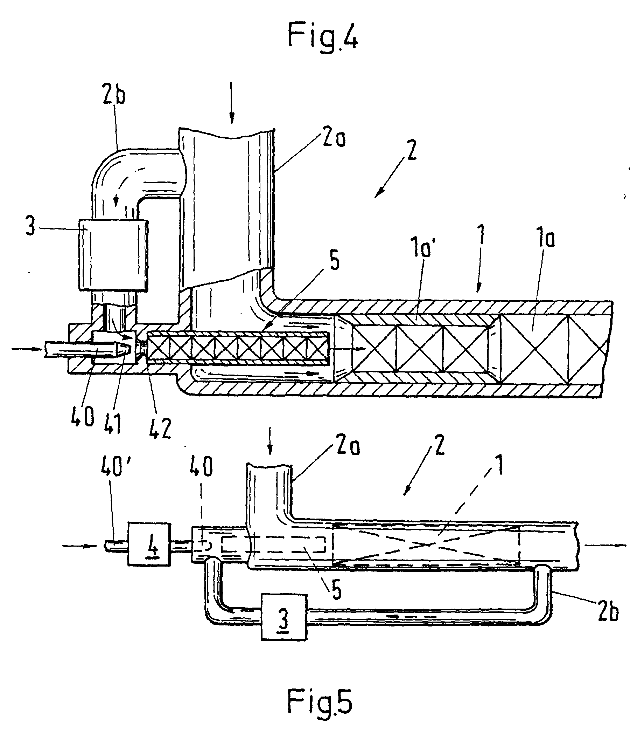

Bei der in Fig.4 dargestellten Variante weist die Einrichtung 2 einen zweiteiligen Hauptmischer 1 auf, der sich aus einem Vormischer 1a' und einem Nachmischer zusammensetzt, dessen Mischeinbauten 1a einen grösseren Durchmesser als jene des Vormischers aufweisen. Solche zweitteilige Mischer sind aus der EP-PS 0 472 491 bekannt (siehe auch M. Fleischli et al "Neue Erkenntnisse zum Mischen und Dispergieren von Flüssigkeiten mit grossen Viskositätsunterschieden in statischen Mischern", Chem.-Ing.-Tech. 1990, S. 650 - 654). Im Vormischer 1a' werden bei erhöhter Scherung feine Tropfen oder Blasen des Additivs erzeugt. Im Nachmischer wird bei einer relativ langen Mischzeit für eine Auflösung und Mischung des Additivs gesorgt. Die Spitze 41 der Einspeisedüse 40 liegt im wesentlichen parallel zur Strömungsrichtung des hochviskosen Fluids. Zwischen der Düse 40, durch die das niedrigviskose Fluid eingespeist wird, und dem Hilfsmischer 5 ist eine Blende 42 angeordnet. Die Düsenspitze 41 ist konisch ausgebildet. Eine derartige Zumischvorrichtung mit einer Blende ist auch aus der EP-PS 0 472 491 bekannt.

Fig.5 zeigt eine Mischeinrichtung 2, bei der die Seitenlinie 2b als Rückführung ausgebildet ist. Bei dieser Ausführungsform kann es vorteilhaft sein, mehr als 20% des Hauptstroms abzuzweigen. Verglichen mit den anderen beschriebenen Ausführungsbeispielen muss hier im Hilfsmischer 5 dank der Rückführung eine kleinere Menge an niedrigviskosem Fluid (Additiv) zugemischt werden. Dies ist von Vorteil, da die Tendenz zum Entmischen am Ausgang des Hilfsmischers 5 weniger gross ist.

Beim Betrieb der erfindungsgemässen Mischeinrichtung 2 wird im Hauptmischer 1 eine Druckdifferenz von 20 bis 60 bar hergestellt. Mit der Pumpe 3 der Seitenlinie 2b wird für den Hilfsmischer 5 eine treibende Druckdifferenz von 80 bis 200 bar erzeugt.

## Patentansprüche

1. Mischeinrichtung (2) zum Mischen eines niedrigviskosen Fluids in ein hochviskoses Fluid, folgende Teile umfassend: eine zum Leiten von hochviskosem Fluid vorgesehene Hauptlinie (2a) mit statischen Mischeinbauten (1a) eines Hauptmischers (1); eine Seitenlinie (2b) für einen Zweigstrom, die von der Hauptlinie abzweigend zum Eingang des Hauptmischers führt, wobei die Hauptlinie und die Seitenlinie bei dem Hauptmischer durch im wesentlichen achsparallele Rohrstücke (24, 25) gebildet sind und das Rohrstück (25) der Seitenlinie innerhalb des Rohrstücks (24) der Hauptlinie angeordnet ist; eine in der Seitenlinie angeordnete Pumpe (3); ein statischer Hilfsmischer (5) am Ende der Seitenlinie; sowie eine Düse (40) am Eingang des Hilfsmischers zum Einspeisen von niedrigviskosem Fluid wobei der Abstand zwischen Austritt des Hilfsmischers (5) und Eintritt des Hauptmischers (1) kleiner als das Zweifache des Durchmessers (D) ist, den die Mischeinbauten (1b) des Hilfsmischers aufweisen.

2. Einrichtung nach Anspruch 1, dadurch gekennzeichnet, dass die Seitenlinie (2b) stromaufwärts vor dem Hauptmischer (1) von der Hauptlinie (2a) abzweigt.

3. Einrichtung nach einem der Ansprüche 1 bis 2, dadurch gekennzeichnet, dass die Hauptlinie (2a) vor dem Hauptmischer (1) knieförmig ausgebildet ist und dass in dem knieförmigen Bereich der Hilfsmischer (5) angeordnet ist.

4. Einrichtung nach einem der Ansprüche 1 bis 3, dadurch gekennzeichnet, dass das der Hilfsmischer (5) als Wärmetauscher ausgebildet ist.

5. Einrichtung nach einem der Ansprüche 1 bis 4, dadurch gekennzeichnet, dass die Einspeisedüse (40) für das niedrigviskose Fluid quer zur Strömungsrichtung des hochviskosen Fluids steht.

6. Einrichtung nach einem der Ansprüche 1 bis 5, dadurch gekennzeichnet, dass die Spitze (41) der Einspeisedüse (40) im wesentlichen parallel zur Strömungsrichtung des hochviskosen Fluids liegt und dass zwischen der Düse (40) und dem Hilfsmischer (5) eine Blende (42) angeordnet ist.

7. Einrichtung nach einem der Ansprüche 1 bis 6, dadurch gekennzeichnet, dass der Hauptmischer (1) einen Vormischer (1a') umfasst sowie einen Nachmischer, dessen Einbauten (1a) einen grösseren Durchmesser als der Vormischer aufweist.

8. Verfahren zum Mischen von zwei Fluiden, deren Viskositätsverhältnis mindestens zwei Grössenordnungen beträgt, unter Verwendung einer Einrichtung gemäss einem der Ansprüche 1 bis 7, wobei weniger als 50 %, vorzugsweise 10 bis 15 %, des höherviskosen Fluids aus der Hauptlinie in die Seitenlinie abgezweigt wird.

9. Verfahren nach Anspruch 8, dadurch gekennzeichnet, dass im Hilfsmischer eine wesentlich höhere Scherung des Fluidgemisches als im Hauptmischer vorgesehen ist.

10. Verfahren nach Anspruch 9, dadurch gekennzeichnet, dass das hochviskose Fluid eine Schmelze ist und das niedrigviskose Fluid ein flüssiges oder gasförmiges Additiv ist, dass dieses Additiv im Hilfsmischer in dem hochviskosen Fluid der Seitenlinie in Form von Tropfen bzw. Blasen dispergiert wird, und dass die erzeugte Dispersion im Hauptmischer mit dem Fluid der Hauptlinie vermischt wird, wobei im Hauptmischer eine Verweilzeit vorgesehen ist, die ein zumindest teilweises Auflösen des Additivs durch Eindiffundieren aus den Tropfen bzw. Blasen in das höherviskose Fluid ermöglicht.

11. Verfahren nach einem der Ansprüche 9 bis 10, dadurch gekennzeichnet, dass der Hauptmischer mit einer Druckdifferenz von 20 bis 60 bar betrieben wird und dass mit der Pumpe der Seitenlinie für den Hilfsmischer eine treibende Druckdifferenz von 80 bis 200 bar erzeugt wird.

12. Anwendung des Verfahrens nach einem der Ansprüche 8 bis 11 zum Einmischen eines flüssigen Additivs in eine Polymerschmelze.

## Claims

1. Mixing device (2) for mixing a low-viscosity fluid into a high-viscosity fluid, comprising the following parts: a main line (2a) for carrying high-viscosity fluid and having inbuilt static mixing units (1a) of a main mixer (1); a branch line (2b) for a branch flow which is branched off from the main line to the inlet of the main mixer, the main line and branch line of the main mixer being constructed from pipe sections (24, 25) with essentially parallel axes, and with the pipe section (25) of the branch line being arranged within the pipe section (24) of the main line; a pump (3) located in the branch line; a static auxiliary mixer (5) at the end of the branch line; and a nozzle (40) at the inlet to the auxiliary mixer for feeding in low-viscosity fluid, wherein the distance between the outlet of auxiliary mixer (5) and the inlet of main mixer (1) is smaller than twice the diameter (D) of the inbuilt mixing units (1b) of the auxiliary mixer.

2. Device according to claim 1, characterised in that branch line (2b) branches off from main line (2a) upstream of main mixer (1).

3. Device according to one of the claims 1 to 2, characterised in that main line (2a) is knee-shaped preceding main mixer (1) and in that auxiliary mixer (5) is located in the area of the knee.

4. Device according to one of the claims 1 to 3, characterised in that the auxiliary mixer (5) is constructed as a heat exchanger.

5. Device according to one of claims 1 to 4 characterised in that the feed nozzle (40) for the low-viscosity fluid is located transverse to the direction of flow of the high-viscosity fluid.

6. Device according to one of the claims 1 to 5, characterised in that the tip (41) of feed nozzle (40) lies essentially parallel to the direction of flow of the high-viscosity fluid and in that an aperture (42) is located between the nozzle (40) and the auxiliary mixer (5).

7. Device according to one of the claims 1 to 6, characterised in that main mixer (1) incorporates a pre-mixer (1a') and a post-mixer whose inbuilt units (1a) have a larger diameter than the pre-mixer.

8. Process for mixing two fluids whose viscosity ratio is at least two orders of magnitude using a device according to one of the claims 1 to 7, with less than 50 %, and preferably 10 to 15 %, of the higher-viscosity fluid being branched off out of the main line into the branch line.

9. Process according to claim 8, characterised in that a significantly higher shearing of the fluid mixture takes place in the auxiliary mixer than in the main mixer.

10. Process according to claim 9, characterised in that the high-viscosity fluid is a melt and the low-viscosity fluid is a liquid or gaseous additive, in that in the auxiliary mixer this additive is dispersed in the form of droplets or bubbles in the high-viscosity fluid of the branch line, and in that, in the main mixer, the generated dispersion is mixed with the fluid of the main line, a dwell time being provided in the main mixer to enable at least a partial dissolution of the additive as a result of diffusion out of the droplets or bubbles into the higher-viscosity fluid.

11. Process according to one of the claims 9 to 10, characterised in that the main mixer is operated with a pressure differential of 20 to 60 bar and in that a driving pressure differential of 80 to 200 bar is generated for the auxiliary mixer by the pump in the branch line.

12. Use of the process according to one of claims 8 to 11 for mixing a fluid additive into a polymer melt.

## Revendications

1. Appareil mélangeur (2) pour mélanger un fluide peu visqueux avec un fluide très visqueux, comportant les parties suivantes : une ligne principale (2a) prévue pour guider du fluide très visqueux, avec des installations de mélange statiques (1a) d'un mélangeur principal (1) ; une ligne latérale (2b) pour un flux de dérivation qui, en partant de la ligne principale, mène à l'entrée du mélangeur principal, où la ligne principale et la ligne latérale sont constituées dans le mélangeur principal par des tronçons tubulaires (24, 25) sensiblement parallèles à l'axe et où le tronçon tubulaire (15) de la ligne latérale est disposé à l'intérieur du tronçon tubulaire (24) de la ligne principale ; une pompe (3) disposée dans la ligne latérale, ; un mélangeur auxiliaire statique (5) à la fin de la ligne latérale, ainsi qu'une buse (40) à l'entrée du mélangeur auxiliaire pour l'introduction d'un fluide peu visqueux, où l'écart entre la sortie du mélangeur auxiliaire (5) et l'entrée du mélangeur principal (1) est plus petit que le double du diamètre (D) que présentent les installations de mélange (1b) du mélangeur auxiliaire.

2. Appareil selon la revendication 1, caractérisé en ce que la ligne latérale (2b) dérive en amont du mélangeur principal (1) de la ligne principale (2a).

3. Appareil selon l'une des revendications 1 à 2, caractérisé en ce que la ligne principale (2a), devant le mélangeur principal (1), est coudée et qu'il est disposé dans la zone coudée le mélangeur auxiliaire (5).

4. Appareil selon l'une des revendications 1 à 3, caractérisé en ce que le mélangeur auxiliaire (5) est réalisé comme échangeur de chaleur.

5. Appareil selon l'une des revendications 1 à 4, caractérisé en ce que la buse d'introduction (40) pour le fluide peu visqueux s'étend transversalement à la direction d'écoulement du fluide très visqueux.

6. Appareil selon l'une des revendications 1 à 5, caractérisé en ce que la pointe (41) de la buse d'introduction (40) est sensiblement parallèle à la direction d'écoulement du fluide très visqueux et qu'il est disposé entre la buse (40) et le mélangeur auxiliaire (5) un obturateur (42).

7. Appareil selon l'une des revendications 1 à 6, caractérisé en ce que le mélangeur principal (1) comprend un pré-mélangeur (1a') ainsi qu'un post-mélangeur dont les installations (1a) ont un plus grand diamètre que le pré-mélangeur.

8. Procédé de mélange de deux fluides, dont le rapport de viscosité représente au moins deux ordres de grandeur, en utilisant un appareil selon l'une des revendications 1 à 7, où moins de 50%, de préférence 10 à 15% du fluide plus visqueux sont dérivés de la ligne principale dans la ligne latérale.

9. Procédé selon la revendication 8, caractérisé en ce qu'il est prévu dans le mélangeur auxiliaire un cisaillement bien plus élevé du mélange de fluide que dans le mélangeur principal.

10. Procédé selon la revendication 9, caractérisé en ce que le fluide très visqueux est une masse fondue et que le fluide peu visqueux est un additif liquide ou gazeux, que cet additif dans le mélangeur auxiliaire est dispersé dans le fluide très visqueux de la ligne latérale sous forme de gouttes respectivement de bulles, et que la dispersion produite dans le mélangeur principal est mélangée avec le fluide de la ligne principale, où il est prévu dans le mélangeur principal une durée de séjour qui permet une dissolution au moins partielle de l'additif par une diffusion des gouttes respectivement bulles dans le fluide plus visqueux.

11. Procédé selon l'une des revendications 9 à 10, caractérisé en ce que le mélangeur principal est amené à fonctionner avec une différence de pression de 20 à 60 bars et qu'il est produit avec la pompe de la ligne latérale pour le mélangeur auxiliaire une différence de pression efficace de 80 à 200 bars.

12. Application du procédé selon l'une des revendications 8 à 11 pour mélanger un additif liquide dans une masse fondue de polymère.
